Europäisches Patentamt

European Patent Office

Office européen des brevets

(11) Publication number: **0 284 636**
**A1**

## (12) EUROPEAN PATENT APPLICATION

(21) Application number: **87104824.5**

(22) Date of filing: **01.04.87**

(51) Int. Cl.⁴: **F02M 31/16** , F02M 31/10

(43) Date of publication of application:
**05.10.88 Bulletin 88/40**

(84) Designated Contracting States:
**AT CH DE FR GB IT LI SE**

(71) Applicant: **Mikroker, Szervezö Közvetitö és Ipari Kisszövetkezet 27, Szondy utca H-1204 Budapest(HU)**

(72) Inventor: **Padar, Arpad
26, Harsfa utca
H-8623 Balatonföldvar(HU)**
Inventor: **Bodo, Istvan
58, Karolina ut
H-1113 Budapest(HU)**

(74) Representative: **Hoffmann, Klaus, Dr. rer. nat. et al
Hoffmann . Eitle & Partner Patentanwälte
Arabellastrasse 4
D-8000 München 81(DE)**

(54) **Fuel preheating construction for water-cooled internal-combustion engines, especially for diesel engines.**

(57) Subject of the invention is a fuel preheating construction for water-cooled internal-combustion engines, especially for Diesel-engines comprising a filter (6) arranged in a fuel supply pipe (4) delivering fuel to the engine, a radiator (1) provided with a water inlet branch (3). The present invention can be characterized by a section of the fuel supply pipe (4) delivering fuel to the engine (8) located inside the space of the radiator (1), favourably near the mouth of the water inlet branch (3).

Fig.1.

## FUEL PREHEATING CONSTRUCTION FOR WATER-COOLED INTERNAL-COMBUSTION ENGINES, ESPE-CIALLY FOR DIESEL-ENGINES

Subject of the invention is a fuel preheating construction for water-cooled internal-combustion engines, first of all for Diesel-engines. The suggested construction facilitates cold-starting of engines, but its use also is advantageous after starting by engines operating in a cold environment. Particularly suitable is the use of construction in accordance with invention in connection with vehicle engines.

It is well known that operation of internal-combustion engines in a cold environment, is harmful, in many respects. In cold environment fuel is cold as well - either petrol or diesel fuel - therefore carburation is difficult, injection becomes uncertain, consequently combustion is incomplete, time process is not steady, as a result of all that engine efficiency is bad and environment pollution is increased.

The operation of diesel fuel engines at low temperatures is particularly unfavourable, because in the cold, fuel supply pipe wax solids build up and the filter connected to fuel supply pipe clogs and as a result of this engine operation becomes even more irregular, because fuel delivery will be unstable and bumpy. In diesel fuel engines, waxing is disadvantageous also for the reason that after stopping of engine the filter almost fully clogs and restarting is usually impossible.

It is an old effort to facilitate or at least to make possible cold starting especially of diesel fuel engines. There are a number of solutions where cold start is ensured by different ways of preheating. All these solutions demand special equipment, in many cases they increase fire-hazard in the engine environment, but no satisfactory solution was achieved.

For operation in cold environment there are solutions to ensure that sudden cooling of environment should not cause a trouble in engine operation. By such known constructions a separate water space was formed and feed with the engine's cooling water and the heat accumulated in this water space served for bridging sudden cold periods. Such solutions were used principally in connection with aero-engines to eliminate inconveniences caused by sudden coolings. An example of the outlined solution is the HU-PS 68224. The solution given in the indicated patent specification lightens only the problems caused in operation by environment cooling, but it does not ensure cold-starting, because the heat-insulated space connected to engine radiator after certain standstill cools down as well.

The disadvantage of the above solution is that the mass of cooling system and accordingly the specific mass of the whole engine increases. Generally, the whole cooling system becomes more complicated, breakdown probability and the number of components demanding maintenance are augmented.

There are solutions where a heat exchanger is used, which is in heat transfer connection with engine radiator and one side thereof serves for preheating fuel. Even such constructive solutions did not solve the problem of cold-starting, they made possible a more favourable fuel supply in operation through steadily preheating fuel. In the case of the outlined solutions using a heat exchanger, the disadvantage is that, the mass of cooling system is high and consequently the specific mass of the whole engine is higher than required by the power of the engine.

For facilitating cold starting and operation of diesel fuel engines different additives are used in diesel fuel. These additives serve for preventing or at least reducing waxing. As additives petrol or petroleum are generally used but the use of additives cannot solve the existing problems either, not to mention that fuel with additive is considerably more expensive than fuel without additive. Another disadvantage of such solutions is the fact that the lubricating property of diesel fuel considerably decreases, therefore such constructive parts which utilize also the lubricating effect of diesel fuel are subjected to increased abrasion. The practice proved that even in case of using diesel fuel with the mentioned additives waxing cannot be completely eliminated so the problem of cold-starting cannot be solved by additives.

The object of the invention is to provide a solution for pre-heating fuels that ensures both cold-starting and more favourable operation in cold environment without substantial modification of engine radiator, leaving almost unaltered the mass of engine cooling system.

It is understood that motor radiator does not mean only the radiator itself, but also the constructive parts containing cooling water and connected to engine block, e.g. pipes, pipe branches, etc.

The invention is based on the recognition that waxing should be prevented already during engine operation. As a result, filters will not be clogged by wax and in the course of cold-starting fuel can pass through a clean filter which is free of deposited wax. A further point of the recognition is the fact that hot water appears in the area near the hot water inlet branch of engine radiator already after the first strokes of engine, thereafter in order to increase the temperature of fuel supply pipe and diesel fuel contained in it by the first hot water inflow a section - as short as possible - of fuel supply pipe is practically placed in the area neighbouring this inlet branch.

The object outlined above is achieved by a fuel pipe-heating construction, wherein one section of fuel pipe delivering fuel to engine is contained in the space of radiator, favourably in the area where hot water enters the radiator. The fuel supply pipe arranged inside the radiator may be a simple straight pipe section. This fuel pipe section may be formed as well in wavy, slinglike or spiral shape. It is practical that the fuel supply pipe section being inside the radiator is a pipe section upstream the filter.

If the engine will operate expededly also in extremely hot environment advantageously a by-pass pipe is connected to the fuel supply pipe section inside the radiator. Through said by-pass pipe the fuel flow can evade radiator. In such case in more high ambient temperature fuel preheating is not utilized. This particular solution may be necessitated mainly in petrol engines.

The main point of the invented construction is that a section of the fuel supply pipe leading to the engine is located in the inner space of the radiator, favourably in the neighbourhood of water inlet branch.

A favourable and practical embodiment of the invented construction a pipe section upstream filter passes the inner space of the radiator.

In a favourable embodiment of the invented construction the section of the fuel supply pipe located inside the radiator is bridged by a by-pass pipe.

Details and further characteristics of the construction in accordance with invention will become clear from the following description of a preferred embodiment, wherein reference is made to the enclosed drawings. In the drawings:

Fig. 1 shows a front view of the invented construction,

Fig. 2 is a side view of the construction according to Fig. 1.

The invented construction is schematically shown in the drawings and constructive details not belonging to the essence of the invention (taken in a closer sense) are only sketchily indicated.

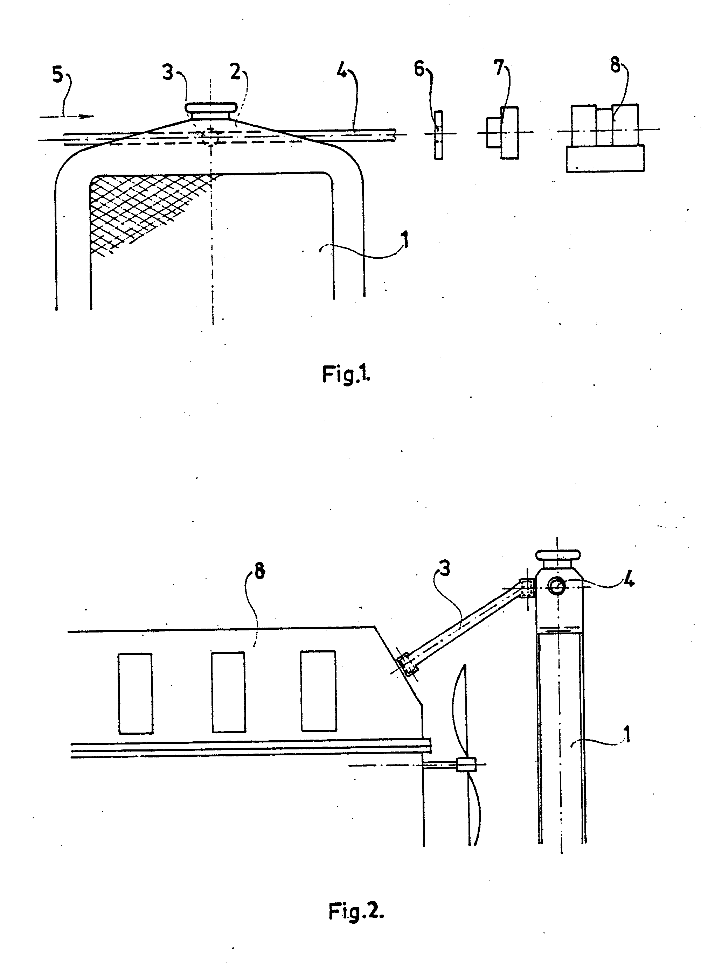

Vehicle engines are usually provided with a radiator 1, partially indicated in Figs. 1 and 2. The engine radiator 1 may be of usual shape and comprising among others also an inlet branch 3 and cooling water supply pipes. In the preferred embodiment the invention is applied essentially in connection with the cooling radiator, but this is not absolutely necessary. A section of fuel supply pipe 4 is located inside the upper water space of the radiator 1, in the distributing space 2. The fuel supply pipe 4 is connected to a filter 6 and after the filter 6 there is a fuel pump 7 and afterwards the engine 8, considering the direction of fuel flow.

Warm water arriving from the engine 8 enters the distributing space 2 of water radiator 1 through the inlet branch 3. During engine operation in the fuel supply pipe 4 fuel flows in the direction showed by arrow 5 and during operation preheated fuel flows to the filter 6. Accordingly, no waxing of diesel fuel occurs, because the temperature of diesel fuel does not fall in such a measure that waxing could begin. It is evident that after stopping the engine 8 the filter 6 will be free from wax. When starting in cold state the fuel pump 7 can easily overcome the resistance of the clean filter 6, in this way engine 8 can be started. Having started the engine 8 already after some strokes slightly heated water flows through the inlet branch to the distributing space 2 of radiator. If a section of the fuel supply pipe 4 is located at the mouth of the inlet branch 3 then already the first hot water quantities ensure fuel preheating and accordingly there is no time enough for waxing from the cold fuel in such a measure which could clog the filter 6. Thereby the phenomenon is eliminated in which the diesel engine even after a succesful cold start generally after some strokes stops, because wax solids from the cold diesel fuel flow, build up in the filter 6 and these wax solids clog the filter 6 after the first period of operation after starting.

The construction in accordance with this invention can be made in such a way that to the section of the fuel supply pipe 4 located inside the radiator 1 a by-pass pipe is connected. On installing necessary shut-off valves the fuel flows to the engine 8, alternatively either through the section of the fuel supply pipe 4 located inside radiator 1, or in case of extremely high ambient temperature through the by-pass pipe.

The construction in accordance with this invention can be made in such a way, as well, that the preheating section of the fuel supply pipe 4 - suitably a slinglike pipe section - is placed at the inlet branch 3, e.g. near its mouth, being at the engine block, or perhaps in the space of engine block where no complicated constructive modification or installation work is needed.

As it is clear from the examplary embodiment of the invented construction, the mass of cooling system only negligibly increases and accordingly the specific mass of the whole engine is not influenced.

By means of the construction in accordance with this invention optimal conditions are provided both for cold-starting and operation. On using the invention a significant decrease in fuel consumption can be achieved, engine efficiency can be improved, moreover considering environment pollution the application of invention is very favourable.

With use of the invented construction there is no need to change considerably the usual structure of engines and cooling systems, furthermore by existing engines and cooling systems the invented construction can be carried out and applied subsequently.

## Claims

1. Fuel preheating construction for water-cooled internal-combustion engines, first of all for Diesel-engines comprising a filter arranged in a fuel supply pipe delivering fuel to the engine, a radiator provided with a water inlet branch, **characterized** in that a section of the fuel supply pipe (4) delivering fuel to the engine (8) is located inside a space of the radiator (1), favourably near the mouth of the water inlet branch (3).

2. The fuel preheating construction claimed in claim 1, **characterized** in that said section of fuel supply pipe (4) located inside the space of the radiator (1) is arranged upstream of the filter (6).

3. The fuel preheating construction claimed in claims 1 or 2, **characterized** in that said section of the fuel supply pipe (4) located inside the radiator (1) is in connection with a by-pass pipe.

Fig.1.

Fig.2.

European Patent
Office

EUROPEAN SEARCH REPORT

Application Number

EP 87 10 4824

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 336 720 (MENZ) <br> * Abstract; claims 1,3; page 4, last paragraph; page 6, last 2 lines; page 7; figures 1,2 * | 1 | F 02 M 31/16 <br> F 02 M 31/10 |
| Y | | 2,3 | |
| Y | GB-A-2 170 267 (WARM DIESEL) <br> * Abstract; figure 1 * | 2 | |
| Y | DE-U-8 412 073 (SCHMIDT) <br> * Abstract; figure 1 * | 3 | |
| X | DE-A-3 514 071 (FUCHS) <br> * Claims 1-4; page 4, last 3 paragraphs; page 5, paragraphs 1,2 * | 1,3 | |
| X | DE-A-2 821 473 (KEMPER) <br> * Claims 1,4,19; page 9, last paragraph; page 10, paragraph 1 * | 1,3 | |
| | | | TECHNICAL FIELDS SEARCHED (Int. Cl.4) |
| | | | F 02 M |

The present search report has been drawn up for all claims

| Place of search | Date of completion of the search | Examiner |
|---|---|---|
| THE HAGUE | 16-11-1987 | JORIS J.C. |